# EUROPEAN PATENT APPLICATION

(11) **EP 4 219 164 A1**
(43) Date of publication of application: **02.08.2023**
(21) Application number: 23153688.9
(22) Date of filing: 27.01.2023
(51) Int. Cl.: B33Y 50/02, G06F 30/17, G06F 30/27, G06F 113/10

(54) **SYSTEM AND METHOD FOR 3D MULTI-SCALE MODELING**

(30) Priority: 28.01.2022 US 202217587214
(71) Applicant: Dassault Systèmes Americas Corp., Waltham, MA 02451 (US)
(72) Inventor: Mechin, Pierre Yves, 78140 Velizy-Villacoublay (FR); Doyle, Michael Joseph, Charlotte, 28262 (US)
(74) Representative: Bandpay & Greuter

(57) **Abstract**

A computer-implemented method and corresponding computer-based system generate a three-dimensional (3D) multi-scale model of a 3D system. The computer-implemented method generates, at a given scale, an artifact model that indicates properties, characteristics, and artifacts of the 3D system. The computer-implemented method modifies a series of representational models of the 3D system based on the artifact model generated. Modifying the series includes mapping the properties, characteristics, and artifacts to a representational model in the series of representational models at a higher scale or lower scale relative to the given scale. The mapping bridges a given representational model of the series of representational models at the given scale and the representational model at the higher scale or lower scale. The computer-implemented method automatically stores, in a database, the artifact model in association with the series of representational models modified, thereby generating the 3D multi-scale model of the 3D system.

## Description

### BACKGROUND

In view of an increasing need to understand and control the behavior of products and processes at multiple scales, multi-scale modeling and simulation has emerged as a focal research area in applied science and engineering. Multi-scale modeling refers to a style of modeling in which multiple models at different scales are used to describe a system, e.g., a real-world system. In a multi-scale model, a method transforms information at one scale and transfers same to another scale, a process which may be referred to as "scale bridging" or "scale linkage." Approaches for scale bridging/linkage exist and come in two general varieties. For the materials/formulation to the design-engineering scale, existing approaches use empirical fits to link data. For the design-engineering to production scale, statistical process models exist.

### SUMMARY

An example embodiment of a computer-implemented method and system disclosed herein relates to three-dimensional (3D) multi-scale modeling and simulation of a 3D system. While an example embodiment disclosed herein may be described with regard to a complex-composite system, embodiments are not limited thereto and may be used in a much wider context for any material, mixture, or formulated and produced system.

Structures comprised of more than one material (*e.g*., a material with a surface coating for non-limiting example) can be modeled via an example embodiment disclosed herein to better represent real world materials. Such an example embodiment may, for non-limiting example, generate a chemically and physically realistic model to map atomistic materials scale properties to measured properties for a set of test coupons fabricated with a process from one or more materials. This is useful to improve the simulation of material performance at the bulk scale, and at the nanometer scale and larger.

Such a realistic model is also useful because it enables non-local phenomena and non-equilibrium phenomena to be studied and long-time scale properties, such as chemical degradation in the environment for non-limiting example, to be understood. Simulation of such a realistic model enables, for non-limiting example, a prediction (in a computer-based virtual world) how a material changes (*e.g*., aging, lifespan) and how the material performs with respect to design, safety, lifespan, etc. The results of such simulations can be used to modify the real-world systems upon which models were based. For instance, embodiments can be used to predict failures of the real-world systems and modify the designs of such systems in the real-world.

According to an example embodiment, a computer-implemented method generates a 3D multi-scale model of a 3D system. The computer-implemented method comprises generating, at a given scale, an artifact model that indicates properties, characteristics, and artifacts of the 3D system. The computer-implemented method further comprises modifying a series of representational models of the 3D system based on the artifact model generated. The modifying includes mapping the properties, characteristics, and artifacts to a representational model in the series of representational models at a higher scale or lower scale relative to the given scale. The mapping bridges (time and space) a given representational model of the series of representational models at the given scale and the representational model at the higher scale or lower scale. The computer-implemented method further comprises automatically storing, in a database, the artifact model in association with the series of representational models modified, thereby generating the 3D multi-scale model of the 3D system.

The computer-implemented method may further comprise automatically storing model information in the database. The model information may represent provenance information, training data set information, learning method information, ancillary data, measured or predicted data to which the series of representational models correspond, or a combination thereof. The model information may be associated in the database with the series of representational models, the artifact model, or a combination thereof. Generating the artifact model may include identifying (determining) the properties, characteristics, and artifacts, automatically, via machine learning. The identifying (determining) may be performed at the given scale. It should be understood, however, that the identifying (determining) may incorporate other scale information, such as from a lower scale detail or a higher scale performance characteristic. The lower scale is lower relative to the given scale and the higher scale is higher relative to the given scale.

The machine learning may include employing deep learning, adversarial learning, a genetic or evolutionary method, other modeling or segmentation-classification approach to modeling, or a combination thereof for non-limiting example.

The computer-implemented method may further comprise performing the machine learning against a set of systematic test results of samples.

The computer-implemented method may further comprise controlling the machine learning with a closed loop or subject to at least one optimality criterion, such as pareto optimality determined via pareto optimization analysis for non-limiting example. The computer-implemented method may further comprise performing the machine learning, iteratively, based on a performance criterion (*e.g*., ultimate yield strength for non-limiting example), convergence threshold (*e.g*., 1%, 5%, etc. for non-limiting example), quality metric, limit value or group of limit values, or a combination thereof. The computer-implemented method may further comprise determining, via the closed loop or subject to the at least one optimality criterion, whether the performance criterion, convergence threshold, quality metric, limit value or group of limit values, or the combination thereof, has been satisfied.

The computer-implemented method may further comprise generating the series of representational models by: (i) generating at least one representational model, of the series of representational models, based on a manufacturing process and (ii) employing characteristics of a plurality of test coupons, the plurality of test coupons manufactured via the manufacturing process.

Each representational model of the series of representational models may be built at a different scale of a plurality of scales, wherein the plurality of scales includes the given scale. The computer-implemented method may further comprise generating a respective artifact model at each scale of the plurality of scales.

The computer-implemented method may further comprise, in a training phase, training the series of representational models based on at least one respective training data set. The computer-implemented method may further comprise, in an execution phase, running the 3D multi-scale model, the running producing a prediction of an onset of failure in the 3D system. The computer-implemented method may further comprise, in a validation phase, improving accuracy of the prediction, produced in the execution phase, by relearning the series of representational models and artifact model based on measured data or predicted data input for the series of representational models.

The 3D system may be an architectural system, component, material, or structure. The structure may include i) a plurality of raw materials or intermediate materials or ii) a mixture or formulation of the plurality of raw or intermediate materials.

The 3D system may be a real-world system. Each representational model in the series of representational models may be built at a different scale. The different scales may include a chemical-substance scale, materials-substance scale, engineering-design scale, engineering-production-process scale, system lifetime scale, or combination thereof.

According to another example embodiment, a computer-based system for generating a three-dimensional (3D) multi-scale model of a 3D system comprises at least one memory and at least one processor coupled to the at least one memory. The at least one processor is configured to generate, at a given scale, an artifact model that indicates properties, characteristics, and artifacts of a 3D system. The at least one processor is further configured to modify a series of representational models of the 3D system based on the artifact model generated. Modifying the series includes mapping the properties, characteristics, and artifacts to a representational model in the series of representational models at a higher scale or lower scale relative to the given scale. The mapping bridges a given representational model of the series of representational models at the given scale and the representational model at the higher scale or lower scale. The at least one processor is further configured to automatically store, in a database, the artifact model in association with the series of representational models modified, thereby generating a 3D multi-scale model of the 3D system.

Alternative computer-based system embodiments parallel those described above in connection with the example method embodiment.

It should be understood that example embodiments disclosed herein can be implemented in the form of a method, apparatus, system, or non-transitory computer readable medium with program codes embodied thereon.

### BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.
FIG. 1A is a block diagram of an example embodiment of a computing environment in which a materials scientist is using a computer-based system for generating a three-dimensional (3D) multi-scale model of a 3D system.
FIG. 1B is a block diagram of an example embodiment of an artifact model and a series of representational models.
FIG. 2 is a flow diagram of an example embodiment of a computer-implemented method for generating a 3D multi-scale model of a 3D system.
FIG. 3 is a block diagram of an example embodiment of a procedure for building a representational model.
FIG. 4 is a block diagram of an example embodiment of elements of features, process fabrication characteristics, and an analysis that may be employed by a complex procedure for building property models from nano-scale data with multiple types of materials.
FIG. 5 is a block diagram of an example embodiment of a procedure to build property models from nano-scale data with one type of material against processed part performance data.
FIG. 6 is a block diagram of an example of the internal structure of a computer in which various embodiments of the present disclosure may be implemented.

### DETAILED DESCRIPTION

A description of example embodiments follows.

An example embodiment disclosed herein relates to three-dimensional (3D) multi-scale modeling and simulation of a 3D system and may be applicable to areas where chemical, nanometer, and domain microstructures are used to predict and understand product performance and behavior, such as corrosion, degradation, creep, performance of surface protection coatings, matrix and fiber composites, complex mixtures and formulations, multiphase flow, chemically reactive systems or chemical process effects, for non-limiting example. While an example embodiment disclosed herein may relate to 3D multi-scale modeling and simulation of a complex-composite system, it should be understood that embodiments are not limited to a complex-composite system and may, for example, be applicable to any architectural system, component, material, or structure.

At the core of a 3D multi-scale model are models and related methods that couple together processes at different scales, to transform information at one scale and transfer it to another scale. Such transformation and transfer is referred to in the art as scale bridging (linkage). An example embodiment of a scale linkage (bridging) framework (*e.g*., computer-based system/architecture/method) disclosed herein may be extensible to areas other than those disclosed above. Such framework may be developed for areas based on a material of interest, a method of testing, and/or a time scale of an observable feature manufactured from the material. Approaches to scale linkage exist in the art and come in two general varieties:
(1) For materials, formulation, and the design-engineering scale, existing approaches use empirical fits to link data. In contrast to (1), an example embodiment disclosed herein may employ a machine learned model which accounts for artifacts of fabrication and testing between characteristics determined at different scale levels.
(2) For the design-engineering to production scale, existing statistical process models fail to account for both production and raw materials variation and their impact on process and product final quality. This is a significant approximation, which an example embodiment disclosed herein improves upon.

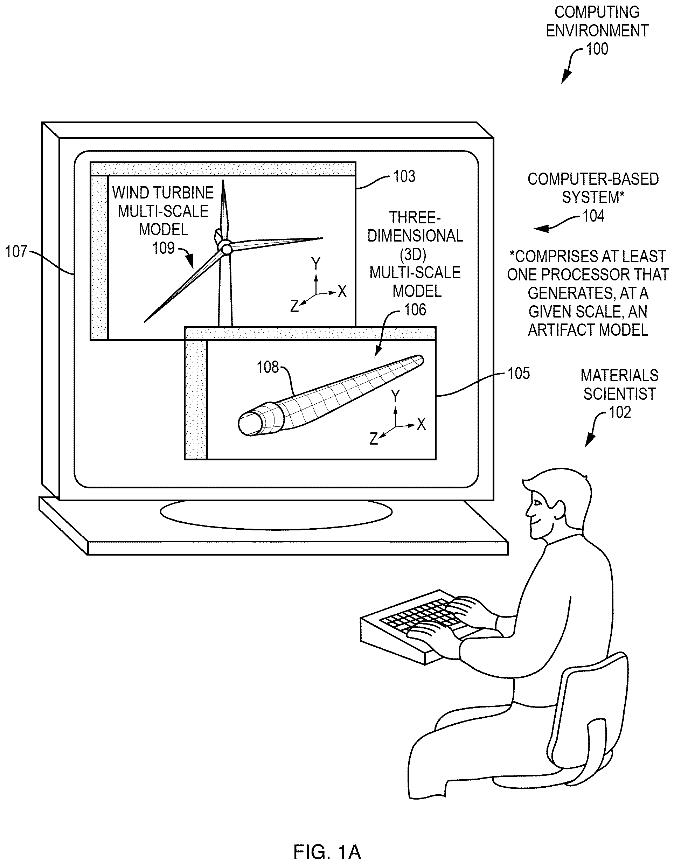

Both of the existing scale linkage approaches, that is, (1) and (2) disclosed above, are methods that produce non-ideal models, with little transferability or extensibility and, thus, such existing approaches produce models that may be considered to be poor representations of real-world materials, their derived properties, test samples, and/or products. In contrast to (1) and (2), an example embodiment of a system and computer implemented method disclosed herein may, for non-limiting example, use machine learning to generate a chemically and physically realistic multi-scale model, to map atomistic materials scale properties to the properties measured for a set of test coupons fabricated with a process from one or more materials for non-limiting example. Such a multi-scale model is disclosed further below with regard to FIGS. 1A-B and is useful to improve the simulation of material performance at the bulk scale, as well as the nanometer scale and larger.

Such a multi-scale model is also useful because it enables non-local phenomena and non-equilibrium phenomena to be studied and long-time scale properties, such as chemical degradation in the environment for non-limiting example, to be understood. While an example embodiment disclosed herein may be disclosed as being applied to a composite system, such as a wind turbine blade for non-limiting example, such an example embodiment is not limited thereto and may be used in a much wider context for any material, mixture, or formulated and produced system. Structures including more than one material can also be modeled via an example embodiment disclosed herein to better represent real world materials, such as disclosed below with regard to FIG. 1A.

FIG. 1A is a block diagram of an example embodiment of a computing environment 100 in which a materials scientist 102 is using an example embodiment of a computer-based system 104 to generate a three-dimensional (3D) multi-scale model 106 of a 3D system. A materials scientist is a person who studies the structures and chemical properties of various materials to develop new products or enhance existing ones. It should be understood that the computer-based system 104 is not limited to being used by a materials scientist. The 3D system may be an architectural system, component, material, or structure, the structure including i) a plurality of raw materials or intermediate materials or ii) a mixture or formulation of the plurality of raw or intermediate materials. The 3D system may be a real-world system, such as a wind turbine blade for non-limiting example.

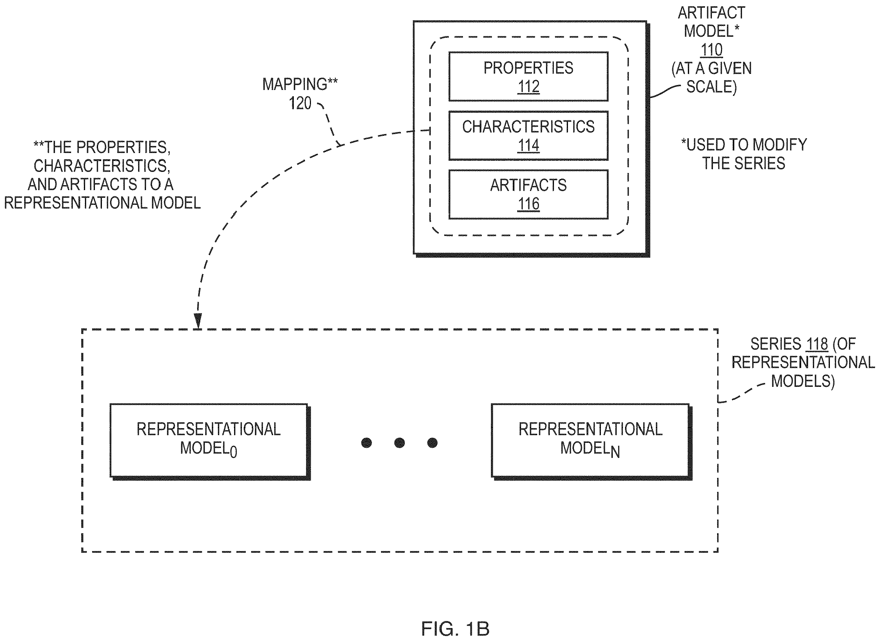

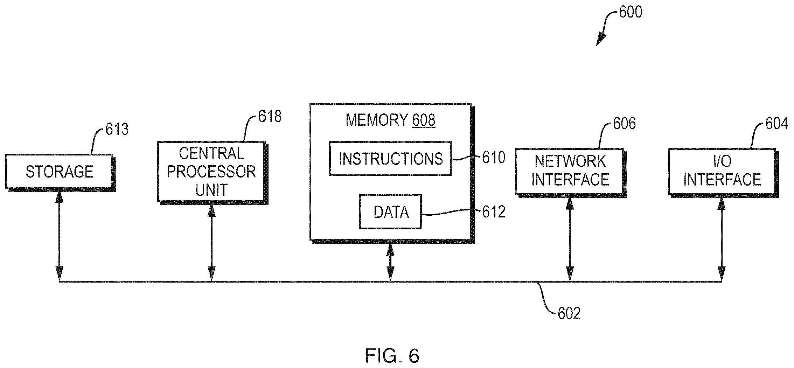

In the example embodiment of FIG. 1A, the materials scientist 102 is using the computer-based system 104 to generate the 3D multi-scale model 106 of a 3D system, that is, a real-world (physical) wind turbine blade of a wind turbine for non-limiting example. The computer-based system 104 comprises at least one memory and at least one processor coupled to the at least one memory, such as the central processor unit 618 coupled to the memory 608, disclosed further below with regard to FIG. 6 for non-limiting example. Continuing with reference to FIG. 1A, the at least one processor of the computer-based system 104 is configured to generate, at a given scale, an artifact model, such as the artifact model 110 disclosed below with regard to FIG. 1B.

FIG. 1B is a block diagram of an example embodiment of an artifact model 110 and a series 118 of representational models (*i.e*., representational model₀ ... representational model_{N}) of a 3D system, such as the wind turbine blade disclosed above and further below with regard to FIG. 1A for non-limiting example. With reference to FIG. 1A and FIG. 1B, the at least one processor of the computer-based system 104 is configured to generate, at a given scale, the artifact model 110. The artifact model 110 indicates properties 112, characteristics 114, and artifacts 116 of the 3D system. The at least one processor is further configured to modify the series 118 of representational models of the 3D system based on the artifact model 110 generated. Modifying the series 118 includes mapping 120 the properties 112, characteristics 114, and artifacts 116 to a representational model in the series 118 of representational models at a higher scale or lower scale relative to the given scale. The mapping 120 bridges a given representational model of the series 118 of representational models at the given scale and the representational model at the higher scale or lower scale. The at least one processor is further configured to automatically store, in a database (not shown), the artifact model 110 in association with the series 118 of representational models modified, thereby generating the 3D multi-scale model 106 of the 3D system, that is, a wind turbine blade multi-scale model 108 of a wind turbine blade.

Continuing with reference to FIG. 1A, the materials scientist 102 is interacting with two user interfaces provided by the computer-based system 104, namely a first user interface (UI) 103 and a second UI 105. In one computer operating system, the user interfaces 103, 105 are implemented as so called windows. In a global network (internet) server based computer system, the user interfaces 103, 105 may be implemented as different tabs, screen views, or the like. The first UI 103 and second UI 105 are presented on a display screen 107 of the computer-based system 104 for user interaction. It should be understood that the computer-based system 104 is not limited to providing two user interfaces (UIs).

In the example embodiment, the first UI 103 includes a representation of a wind turbine multi-scale model 109 of a physical (real-world) wind turbine. The second UI 105 includes a representation of the 3D multi-scale model 106, that is, a wind turbine blade multi-scale model 108 of a wind turbine blade of the wind turbine in the example embodiment. It should be understood that a 3D system (or multi-scale model thereof) is not limited herein to a wind turbine blade or wind turbine which are described herein for illustrative purposes.

A wind turbine is real-world object that turns wind energy into electricity using the aerodynamic force from the wind turbine blades, namely rotor blades, which work like an airplane wing or helicopter rotor blade. Wind turbines blades are physical objects designed to be used for more than thirty years. Physical tests are engineered by structural test engineers to quantify fatigue of such blades under cyclic loading. Such physical tests may expose a wind turbine blade to an average stress due to wind conditions to determine the material failure limit after *N* cycles. In the example embodiment of FIG. 1A, the computer-based system 104 is used to generate the wind turbine blade multi-scale model 108 which is an accurate representation of such a 3D system and enables the material failure limit to be determined via computer simulation.

A wind turbine blade can be longer than a wing of an airplane. As such, physical testing of such an object uses a considerable amount of real estate to house the wind turbine blade and resources to physically cycle the wind turbine blade to determine the material failure limit. To avoid costly and time consuming physical tests, the computer-based system 104 may be employed to determine such a material failure limit in a virtual manner.

A wind turbine blade is a composite structure with several material types involved. For example, the wind turbine blade may have a composite skin which is an assembly of layers and core materials. As such, each layer and core may have its own specific modeling in a multi-scale model of such a wind turbine blade. For example, the core may be a honeycomb structure for non-limiting example. The resin from the curing process contributes to the global stiffness of the core. The composite skin may combine several types of layers including a woven layer that may be a balance of 0 and 90-degree tows (fibers), with a variable ratio. Models of such layers and core materials may be included in the series 118 of representational models disclosed above with regard to FIG. 1B.

In each uni-directional layer of the wind turbine blade, the fibers into the resin may be randomly distributed. Variability in the manufacturing process of the wind turbine blade, such as fiber diameter, volume fraction of fiber, and minimum space between fibers, can lead to artifacts, such as gases being trapped during the curing process of the resin, creating porous material. The artifact model 110 of FIG. 1B, disclosed above, is generated at a given scale and can indicate such artifacts for non-limiting example. As disclosed above with reference to FIG. 1B, the artifact model 110, generated at the given scale, indicates properties 112, characteristics 114, and artifacts 116 of the 3D system. According to an example embodiment, a series 118 of representational models of a 3D system, such as a wind turbine blade or another 3D system, may be based on such an artifact model 110. Each representational model in the series 118 of representational models may be built at a different scale. The different scales may include a chemical-substance scale, materials-substance scale, engineering-design scale, engineering-production-process scale, system lifetime scale, or combination thereof for non-limiting example.

Such modification includes mapping 120 the properties 112, characteristics 114, and artifacts 116 to a representational model in the series 118 of representational models at a higher scale or lower scale relative to the given scale. Non-limiting examples of such mapping 120 with two industry driven series of representational models is disclosed for non-limiting examples that relate to a lithium ion battery and wind turbine blade. In the non-limiting examples, there is both a need for a property diffusion or tensile modulus, a characteristic, voltage or strength, and a production variability, such as cycles before the battery fails or time before the wind turbine blade has micro cracks. A non-limiting example of such mapping 120 is one in which models may map, for the lithium ion battery, a diffusion rate of lithium ions from a chemical substance model of an electrolyte. The diffusion rate may then also be mapped to a voltage/state of charge model for a whole cell of the lithium ion battery to estimate open cell voltage, and the artifacts' mapping may include the mapping of such model to include an operating temperature or number of cycles of charge/discharge to understand a variability of battery lifespan. Another artifact mapping may, for non-limiting example, map a variation of an open cell voltage with the production characteristics (*e.g*., factory quality parameters, such as temperature, humidity, time of production, location, etc. for non-limiting example).

In the area of composites for wind turbine blades, the mapping 120 of the properties 112, characteristics 114, and artifacts 116 to a representational model in the series 118 may, for non-limiting example, include mapping a polymer structure used in the resin to a Youngs modulus mechanical performance prediction, the Young's modulus combined with the fiber spacings and direction to the failure stress of a formed part of the wind turbine blade. The artifacts 116 may be the production characteristics, factory, batches of chemicals used, time of day and shift ID as well as facility and process unit identifiers. In such an implementation, said artifacts 116 may be mapped to the mean time between failures of the as produced wind turbine blade for non-limiting example. Continuing with reference to FIGS. 1A and 1B, the mapping 120 bridges a given representational model of the series 118 of representational models at the given scale and the representational model at the higher scale or lower scale, enabling an accurate 3D multi-scale model to be generated. Simulation of same enables validation of the structure, that is, a wind turbine blade for non-limiting example, or another type of 3D structure.

At the wind turbine blade scale, global simulation may be performed by the computer-based system 104 according to the multiscale simulations. The virtual model, that is, the 3D multi-scale model 106, enables virtual modeling of manufacturing process variability and enables full virtual validation of structure to be performed faster and at a reduced cost relative to physical testing. According to an example embodiment, the 3D multi-scale model 106 may be material class-specific and may be subject to model and version management to ensure referential integrity.

As disclosed above with reference to FIGS. 1A and 1B, the at least one processor of the computer-based system 104 automatically stores, in a database, the artifact model 110 in association with the series 118 of representational models modified, thereby generating the 3D multi-scale model 106 of the 3D system. According to an example embodiment, the at least one processor may be further configured to automatically store model information in the database.

The model information may represent provenance information, training data set information, learning method information, ancillary data, measured or predicted data to which the series 118 of representational models correspond, or a combination thereof for non-limiting example. The model information may be associated in the database with the series 118 of representational models, the artifact model 110, or a combination thereof. Generating the artifact model 110 may include identifying (determining) the properties 112, characteristics 114, and artifacts 116, automatically, via machine learning. The machine learning may include employing deep learning, adversarial learning, a genetic or evolutionary method, other modeling or segmentation-classification approach to modeling, or a combination thereof for non-limiting example. The at least one processor may be further configured to perform the machine learning against a set of systematic test results of samples.

The identifying (determining) may be performed at the given scale. It should be understood, however, that the identifying (determining) may incorporate other scale information, such as from a lower scale detail or a higher scale performance characteristic. The lower scale is lower relative to the given scale and the higher scale is higher relative to the given scale.

According to an example embodiment, the at least one processor may be further configured to control the machine learning with a closed loop or subject to at least one optimality criterion, such as pareto optimality determined via pareto optimization analysis for non-limiting example. According to another example embodiment, the at least one processor may be further configured to perform the machine learning, iteratively, based on a performance criterion, convergence threshold, quality metric, limit value or group of limit values, or a combination thereof. The at least one processor may be further configured to determine, via the closed loop or subject to the at least one optimality criterion, whether the performance criterion, convergence threshold, quality metric, limit value or group of limit values, or the combination thereof has been satisfied.

According to an example embodiment, the at least one processor may be further configured to generate the series 118 of representational models by: (i) generating at least one representational model, of the series 118 of representational models, based on a manufacturing process and (ii) employing characteristics of a plurality of test coupons, the plurality of test coupons manufactured via the manufacturing process. The manufacturing process may be a characterized manufacturing process that is measured or characterized in some way. For example, in some cases, such as production scale-up or ramp-up, process variables employed by the manufacturing process may be altered in a systematic way via designed experimentation or testing and results of same can be used as inputs to the development of the 3D multi-scale model 106 that lies between the engineering and production scales.

According to an example embodiment, each representational model of the series 118 of representational models may be built at a different scale of a plurality of scales, wherein the plurality of scales includes the given scale. The at least one processor may be further configured to generate a respective artifact model at each scale of the plurality of scales.

While an example embodiment disclosed herein may employ test coupons, which are standard for composite materials, it should be understood that such embodiments are not limited to test coupons and may employ, for example, systematic test results of samples instead of test coupons.

According to an example embodiment, the at least one processor may be further configured to, in a training phase, train the series 118 of representational models based on at least one respective training data set (not shown). The at least one processor may be further configured to, in an execution phase, run the 3D multi-scale model 106 to produce a prediction of an onset of failure in the 3D system. The at least one processor may be further configured to, in a validation phase, improve accuracy of the prediction, produced in the execution phase, by relearning the series 118 of representational models and artifact model 110 based on measured data or predicted data input for the series 118 of representational models.

An example embodiment disclosed herein includes an efficient method that may use machine learning, as disclosed above, to generate a chemically and physically realistic model, to map atomistic materials scale properties to the properties measured for a set of tests coupons fabricated with a process from one or more materials. This is useful to improve the simulation of material performance at the bulk scale and at the nanometer scale and larger. It is also useful because it enables non-local phenomena and non-equilibrium phenomena to be studied and long-time scale properties, such as chemical degradation in the environment, to be understood. While an example embodiment disclosed herein may be described with regard to composite systems, such as a wind turbine blade, it should be understood that embodiments disclosed herein are not limited to composite systems and could be used in a much wider context for any material, mixture, or formulated and produced system. Structures comprised of more than one material can also be modeled using an example embodiment of a computer-implemented method disclosed herein to better represent real world materials.

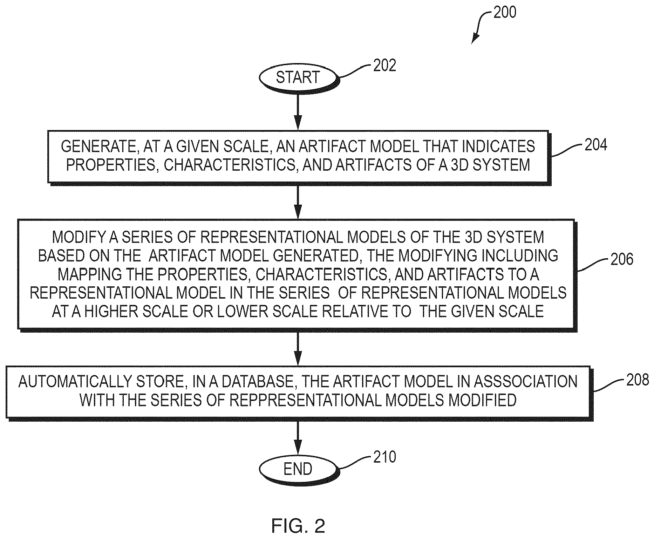

FIG. 2 is a flow diagram of an example embodiment of a computer-implemented method (200) for generating a three-dimensional (3D) multi-scale model of a 3D system. The computer-implemented method comprises generating (202), at a given scale, an artifact model that indicates properties, characteristics, and artifacts of the 3D system. The computer-implemented method further comprises modifying (204) a series of representational models of the 3D system based on the artifact model generated. The modifying (206) includes mapping the properties, characteristics, and artifacts to a representational model in the series of representational models at a higher scale or lower scale relative to the given scale. The mapping bridges a given representational model of the series of representational models at the given scale and the representational model at the higher scale or lower scale. The computer-implemented method further comprises automatically storing (208), in a database, the artifact model in association with the series of representational models modified, thereby generating the 3D multi-scale model of the 3D system. The method thereafter ends (210), in the example embodiment.

The computer-implemented method 200 may further comprise automatically storing model information in the database. The model information may represent provenance information, training data set information, learning method information, ancillary data, measured or predicted data to which the series of representational models correspond, or a combination thereof. The model information may be associated in the database with the series of representational models, the artifact model, or a combination thereof. Generating the artifact model may include identifying the properties, characteristics, and artifacts, automatically, via machine learning. The identifying may be performed at the given scale. The machine learning may include employing deep learning, adversarial learning, a genetic or evolutionary method, other modeling or segmentation-classification approach to modeling, or a combination thereof.

Referring back to FIGS. 1A and 1B, according to an example embodiment, quantum mechanical, atomistic, meso-scale and constitutive models may be applied as inputs or features into the computer-based system 104 for use in generating the series 118 of representational model. The mapping 120 enables bridging (linking) of nano scale, engineering scale, and/or measurement scales.

According to an example embodiment, the computer-based system 104 is self-updating, that is, as new data is received, the series 118 of representational models (also referred to herein as a series of repeated intermediate models) may be determined and then evaluated, ranked, and stored for future retrieval by, for example, an adversarial machine learning process executing on the computer-based system 104.

According to another example embodiment, test process and procedure information can be input to the computer-based system 104 that may be configured to use such information to classify model inputs into descriptors that can embellish (augment) models of systems modeled by the computer-based system 104. According to an example embodiment, the series 118 of representational models may be stored in the database with provenance (origin), data sets, methods, and outcomes, for track and trace reliability and validation.

While connecting across scales may not be a new endeavor, historically all attempts to do so have been limited in scope, extensibility, and accuracy. A key to the failure of existing approaches is the lack of good models that characterize the *artifacts* introduced by testing and their incorporation into models which can be used to predict bottom up performance from the material or top down performance from the environment. The computer-based system 104 is a platform which allows the automated generation of both property/performance models and artifact models. The computer-based system 104 enables the connection of models/simulations into predictions for design, development, and deployment.

The computer-based system 104 may use machine learning approaches to combine any or all of the following characteristics for non-limiting example:
a) from a material (measured and virtual)
b) of a substance (formula and recipe - implicit process conditions)
c) about a test (results, operation and equipment)
d) other scale models (reduced order/homogenized or full complexity).

According to an example embodiment, links between how the series 118 of representational models are derived and their rank order (determined via test set validation) and the data used to construct them (training set) may be preserved by the computer-based system 104, for example, in a database, to allow test-to-test comparison, updates of the representational models in the series 118, and decision traceability and dependency.

According to an example embodiment, the computer-based system 104 enables the construction (update of existing or new) of the 3D multi-scale model 106 with both value prediction and uncertainty. The computer-based system 104 enables models to be built in both an automated way in a bottom up approach, *e.g*., atoms to molecules to materials to distributions to engineering elements to products, hierarchically, and also allows the imposition of top down inputs (*e.g*., loads, cyclic effects, stress, and environmental inputs) that drive fatigue effects and induce material change (usually failure but not always) to be applied to the models of a system, such as the series 118 of representational models of the 3D multi-scale model 106 of a 3D system.

According to an example embodiment, the computer-based system 104 may use a plurality of modeling approaches to iteratively match the data (property) to the features (other models, parameters, conditions and loads), such as, but not limited to, a generative adversarial network (GAN), deep neural network (DNN), genetic function approximation (GFA), and/or other multi-variate statistical or classification approach. Many of such model approaches produce families of related models and such models may be preserved, for example, in a database, for re-use. The computer-based system 104 may be configured to take such models and construct approximate model variants of same in constitutive form, enabling reduced order modeling approaches to be applied and easier user interpretation of the effects of such variants.

According to an example embodiment, the computer-based system 104 may be configured to use an adversarial deep neural computing approach with an iterative and stochastic process to obtain the 3D multi-scale model 106 that may be a realistic computer model of a 3D system, bridging the scales of time, length, and complexity between atomistic, engineering and production scale data.

According to another example embodiment, a computer-implemented method may start with an untrained model network. Based on data and information for a series of test coupons in conjunction with the formulated material characteristics from meso, atomistic, nano and quantum scale modeling, a series of representational models may be developed and trained (step 1), such as the series 118 of representational models disclosed above with regard to FIG. 1B. The models may then be optimized using adversarial approaches and methods to construct improved models with both numerical precision and robust error estimation for different observed properties and characteristics (step 2). Deconvolution of the network may then be performed to identify the physical forms as equations of the underlying property relationships that have been developed (step 3). These new equations may then be re-optimized as features in the model network in step 1 (step 4). The results may then be stored in a data structure with meta-tags for in-use tracking (step 5). Different models, such as but not limited to parametric or data subset variants, can be generated by repeating the above process to get a final statistically averaged ensemble or composite model of the test and processes analyzed. The model generation, learning and optimization process can be either supervised or unsupervised, with integral versioning and master data generated.

As such, according to an example embodiment, a method for generating a 3D multi-scale model of a 3D system, such as a composite system, may comprise preparing a series of test coupons of a material system to be modeled, the test coupons fabricated from a given fabrication process and measuring physical characteristics of each of the test coupons. From an untrained model network, the method may generate one or more data models based on material characteristics from one or more types of scale models from the given fabrication process. The method may perform a deep learning analysis against the set of physical measured properties of the test coupons using an adversarial approach. Responsive to reaching a convergence threshold, the method may deconvolute the model using a reverse logic approach to extract a reduced order model of a performance curve.

According to an example embodiment, a noted improvement relative to an existing method for bridging models is that an example embodiment disclosed herein separates artifact assumptions and approximations introduced during fabrication of test samples, such as test coupons for non-limiting example, and the models associated with mapping the nano scale data to the test coupon experimental level, from the artifacts, assumptions and approximations of the manufactured product, its process and sources of variability. This approach, where the individual scale gaps from nano to meso, from meso to macro, and from macro to production, can be separately developed but connected in an information space, is unique. Further, the mapping of material, compositional, and system features to the production performance and quality metrics of the product, based on a series of lower scale models enables a more accurate or robust model development.

An example embodiment of the computer-based system 104 may use an abstraction of the forms of the models, first, to enrich in a closed loop approach, the forms used in the feature generation, and second, in the high level subsequent models. The computer-based system 104 may be used to generate the robust 3D multi-scale model 106, automatically, with minimal user input. Such functionality allows for the rapid exploration of design parameter space, and autonomous model development as new data is accumulated from testing or production systems and thereby provides an improved user experience due to availability of multiple models. An example embodiment disclosed herein may be used as a generic tool in modeling workflows and on the 3DEXPERIENCE^{®} platform, both in a deterministic approach and a characterization approach. The 3DEXPERIENCE platform, available from Dassault Systèmes SE is a collaborative environment platform providing multiple software solutions.

According to an example embodiment, a computer-implemented method may obtain a machine learned and maintained model for test coupon data and for produced product data. Chemical material model information as well as fabrication process, condition, and sequence of operations details may be encoded as features within the model, such as the multi-scale model 106 of FIG. 1A. The model may then autonomously perform deep learning analysis against a set of physical measured properties using an adversarial approach. Responsive to a convergence threshold in a pareto optimal space being achieved, the model, its state, inputs and outputs may be automatically stored in a data structure and meta-data may be generated to facilitate their extraction and uniquification. In a next step, the model forms and functions may be deconvoluted using a reverse learning approach with symbolic logic to extract the simplest reduced order model of the performance curve. The computer-implemented method may then take a feature or descriptor and perform the above model iteration against a production part using performance information extracted from a source system.

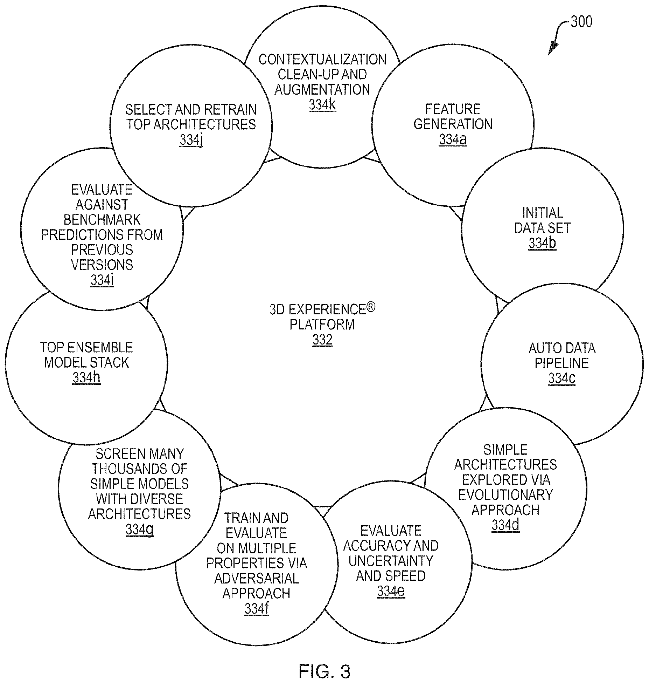

With reference to FIGS. 1A and 1B, an example embodiment of a model, such as a representational model of the series 118 of models, may be built by the computer-based system 104 from nano-scale data with one type of material against test coupon measurement data, using a modeling platform, such as the 3DEXPERIENCE platform, as disclosed below with regard to FIG. 3.

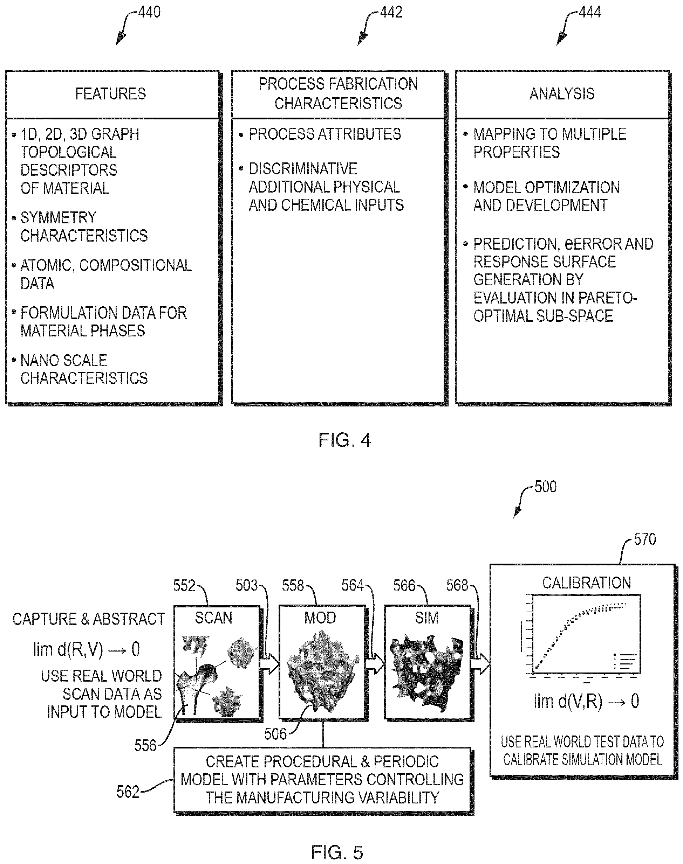

FIG. 3 is a block diagram of an example embodiment of a procedure 300 (computer-implemented method) for building a representational model. The representational model may be referred to as a property model. In the example embodiment, the procedure 300 is implemented using the 3DEXPERIENCE platform 332 for non-limiting example. The procedure 300 includes feature generation (334a), receiving an initial data set (334b), and employing an auto data pipeline (334c). The procedure 300 may explore simple architectures via an evolutionary approach (334d) and evaluate accuracy, uncertainty, and speed (334e) of a representational model. The procedure 300 may train and evaluate multiple properties via an adversarial approach (334f). The procedure 300 may screen a plurality (*e.g*., many thousands for non-limiting example) of simple models with diverse architectures (334g). The procedure 300 may top ensemble the model stack (334h) and evaluate same against benchmark predictions from previous model versions (334i). The procedure may select and retrain top architectures (334j) and perform contextualization clean-up and augmentation (334k) to produce the representational model. Elements of another procedure for building property models are disclosed below with regard to FIG. 4.

FIG. 4 is a block diagram of an example embodiment of elements of features 440, process fabrication characteristics 442, and an analysis 444 that may be employed by a complex procedure for building property models from nano-scale data with multiple types of materials in different physical arrangements, such as layers, orientations or distributions against test coupon measurement data. A simple procedure for building property models from nano-scale data with one type of material is disclosed below with regard to FIG. 5.

FIG. 5 is a flow diagram of an example embodiment of a procedure (computer-implemented method) 500 to build property models from nano-scale data with one type of material against processed part performance data. The procedure 500 may also be referred to as a procedure for bridging models. In the example embodiment, such models are models associated with a hip ball joint employed in a hip replacement for non-limiting example.

The procedure 500 includes scanning (552) real-world objects using real-world scan data 503 as input to a model 506. The scanning may include recording spatial features of real-world objects, such as the hip ball joint 556 for non-limiting example, and details regarding how the material of the hip ball joint 556 was made, characteristics regarding adhesive filler associated with the hip ball joint 556, micro-characteristics, such as porosity, characteristics regarding a coating(s) of the hip ball joint 556, for non-limiting example. It should be understood that the real-world object is a physical 3D object (system) and is not limited to the hip ball joint 556. Further, the real-world scan data 503 may include any information associated with the physical 3D object being modeled, such as material characteristics and processes for making the material, for non-limiting example. In the example embodiment, the procedure 500 includes modeling 558 the 3D system, that is, the hip ball joint 556 in the example embodiment.

With reference to FIGS. 1A, 1B, 2, and 5, the modeling 558 includes generating the 3D multi-scale model 506. The generating may be performed using the computer-based system 104 that may be configured to implement the computer-implemented method 200 of FIG. 2, disclosed above, for non-limiting example. The properties 112, characteristics 114, and artifacts 116 of the artifact model 110 may include properties, characteristics, and artifacts included in the real-world scan data 503. According to an example embodiment, the modeling 558 may include creating (562) a procedural model (*e.g*., model of the process of making the material) and a periodic model with parameters controlling the manufacturing variability of the process.

In the example embodiment of FIG. 5, the procedure 500 may include outputting 564 the 3D multi-scale model 506 to a simulator 566, that is, a computer-implemented method that simulates use of the hip ball joint 556 using the model 506 to generate results 568, by subjecting the 3D multi-scale model 506 to the manufacturing variability. Such results 568 may be employed to perform calibration 570 to calibrate the simulation model, that is, the 3D multi-scale model 506 based on real-world test data. Such calibration may improve the 3D multi-scale model 506 such that it represents a more realistic model of the 3D system, that is, the hip ball joint 556 for non-limiting example. A more realistic model can be used, for example, to determine a material failure limit for the hip ball joint 556 for non-limiting example. The procedure 500 may be implemented via an example embodiment of an internal structure of a computer, such as disclosed below with regard to FIG. 6.

FIG. 6 is a block diagram of an example of the internal structure of a computer 600 in which various embodiments of the present disclosure may be implemented. The computer 600 contains a system bus 602, where a bus is a set of hardware lines used for data transfer among the components of a computer or digital processing system. The system bus 602 is essentially a shared conduit that connects different elements of a computer system (*e.g*., processor, disk storage, memory, input/output ports, network ports, etc.) that enables the transfer of information between the elements. Coupled to the system bus 602 is an I/O device interface 604 for connecting various input and output devices (*e.g*., keyboard, mouse, display monitors, printers, speakers, microphone, etc.) to the computer 600. A network interface 606 allows the computer 600 to connect to various other devices attached to a network (*e.g*., global computer network, wide area network, local area network, etc.). Memory 608 provides volatile or non-volatile storage for computer software instructions 610 and data 612 that may be used to implement embodiments (*e.g*., methods 200, 300, 500) of the present disclosure, where the volatile and non-volatile memories are examples of non-transitory media. Disk storage 613 also provides non-volatile storage for the computer software instructions 610 and data 612 that may be used to implement embodiments (*e.g.*, methods 200, 300, 500) of the present disclosure. A central processor unit 618 is also coupled to the system bus 602 and provides for the execution of computer instructions.

Further example embodiments disclosed herein may be configured using a computer program product; for example, controls may be programmed in software for implementing example embodiments. Further example embodiments may include a non-transitory computer-readable medium containing instructions that may be executed by a processor, and, when loaded and executed, cause the processor to complete methods and techniques described herein. It should be understood that elements of the block and flow diagrams may be implemented in software or hardware, such as via one or more arrangements of circuitry of FIG. 6, disclosed above, or equivalents thereof, firmware, a combination thereof, or other similar implementation determined in the future.

In addition, the elements of the block and flow diagrams described herein may be combined or divided in any manner in software, hardware, or firmware. If implemented in software, the software may be written in any language that can support the example embodiments disclosed herein. The software may be stored in any form of computer readable medium, such as random access memory (RAM), read only memory (ROM), compact disk read-only memory (CD-ROM), and so forth. In operation, a general purpose or application-specific processor or processing core loads and executes software in a manner well understood in the art. It should be understood further that the block and flow diagrams may include more or fewer elements, be arranged or oriented differently, or be represented differently. It should be understood that implementation may dictate the block, flow, and/or network diagrams and the number of block and flow diagrams illustrating the execution of embodiments disclosed herein.

While example embodiments have been particularly shown and described, it will be understood by those skilled in the art that various changes in form and details may be made therein without departing from the scope of the embodiments encompassed by the appended claims.

## Claims

1. A computer-implemented method for generating a three-dimensional (3D) multi-scale model of a 3D system, the computer-implemented method comprising:
- generating (204), at a given scale, an artifact model that indicates properties, characteristics, and artifacts of a 3D system;
- modifying (206) a series of representational models of the 3D system based on the artifact model generated, the modifying including mapping the properties, characteristics, and artifacts to a representational model in the series of representational models at a higher scale or lower scale relative to the given scale, the mapping bridging a given representational model of the series of representational models at the given scale and the representational model at the higher scale or lower scale; and
- automatically storing (208), in a database, the artifact model in association with the series of representational models modified, thereby generating a 3D multi-scale model of the 3D system.

2. The computer-implemented method of Claim 1, further comprising automatically storing model information in the database and wherein:
- the model information represents provenance information, training data set information, learning method information, ancillary data, measured or predicted data to which the series of representational models correspond, or a combination thereof;
- the model information is associated in the database with the series of representational models, the artifact model, or a combination thereof;
- generating the artifact model includes identifying the properties, characteristics, and artifacts, automatically, via machine learning; and
- the identifying is performed at the given scale.

3. The computer-implemented method of Claim 2, wherein the machine learning includes employing deep learning, adversarial learning, a genetic or evolutionary method, other modeling or segmentation-classification approach to modeling, or a combination thereof.

4. The computer-implemented method of Claim 2, further comprising performing the machine learning against a set of systematic test results of samples.

5. The computer-implemented method of Claim 2, further comprising:
- controlling the machine learning with a closed loop or subject to at least one optimality criterion;
- performing the machine learning, iteratively, based on a performance criterion, convergence threshold, quality metric, limit value or group of limit values, or a combination thereof; and
- determining, via the closed loop or subject to the at least one optimality criterion, whether the performance criterion, convergence threshold, quality metric, limit value or group of limit values, or the combination thereof has been satisfied.

6. The computer-implemented method of Claim 1 further comprising:
- generating the series of representational models by: (i) generating at least one representational model, of the series of representational models, based on a manufacturing process and (ii) employing characteristics of a plurality of test coupons, the plurality of test coupons manufactured via the manufacturing process.

7. The computer-implemented method of Claim 1, wherein each representational model of the series of representational models is built at a different scale of a plurality of scales, wherein the plurality of scales includes the given scale, and wherein the computer-implemented method further comprises generating a respective artifact model at each scale of the plurality of scales.

8. The computer-implemented method of Claim 1, further comprising:
- in a training phase, training the series of representational models based on at least one respective training data set;
- in an execution phase, running the 3D multi-scale model, the running producing a prediction of an onset of failure in the 3D system; and
- in a validation phase, improving accuracy of the prediction, produced in the execution phase, by relearning the series of representational models and artifact model based on measured data or predicted data input for the series of representational models.

9. The computer-implemented method of Claim 1, wherein the 3D system is an architectural system, component, material, or structure, the structure including i) a plurality of raw materials or intermediate materials or ii) a mixture or formulation of the plurality of raw or intermediate materials.

10. The computer-implemented method of Claim 1, wherein the 3D system is a real-world system and wherein each representational model in the series of representational models is built at a different scale, wherein the different scales include a chemical-substance scale, materials-substance scale, engineering-design scale, engineering-production-process scale, system lifetime scale, or combination thereof.

11. A computer program comprising instructions which, when the program is executed by a computer, cause the computer to perform the method of any one of claims 1 to 10.

12. A computer-based system for generating a three-dimensional (3D) multi-scale model of a 3D system, the computer-based system comprising:
- at least one memory storing the computer program of claim 11; and
- at least one processor coupled to the at least one memory, the at least one processor configured to execute the computer program.

13. A non-transitory computer-readable medium for generating a three-dimensional (3D) multi-scale model of a 3D system, the non-transitory computer-readable medium having encoded thereon the computer program of claim 11.
